# EUROPÄISCHE PATENTSCHRIFT

(11) **EP 2 678 174 B1**
(45) Veröffentlichungstag und Bekanntmachung des Hinweises auf die Patenterteilung: **26.11.2014**
(21) Anmeldenummer: 12705293.4
(22) Anmeldetag: 21.02.2012
(51) Int. Cl.: B60C 23/04

(54) **VERFAHREN ZUM BETREIBEN EINES REIFENDRUCKKONTROLLSYSTEMS FÜR EIN KRAFTFAHRZEUG, REIFENDRUCKKONTROLLSYSTEM UND KRAFTFAHRZEUG**
METHOD FOR OPERATING A TYRE PRESSURE MONITORING SYSTEM FOR A MOTOR VEHICLE, TYRE PRESSURE MONITORING SYSTEM AND MOTOR VEHILCE
PROCÉDÉ PERMETTANT DE FAIRE FONCTIONNER UN SYSTÈME DE CONTRÔLE DE LA PRESSION DES PNEUS D'UN VÉHICULE AUTOMOBILE, SYSTÈME DE CONTRÔLE DE LA PRESSION DES PNEUS ET VÉHICULE AUTOMOBILE

(30) Priorität: 23.02.2011 DE 102011004561
(43) Veröffentlichungstag der Anmeldung: 01.01.2014
(73) Patentinhaber: Continental Automotive GmbH, 30165 Hannover (DE)
(72) Erfinder: KRETSCHMANN, Matthias, 93059 Regensburg (DE)
(86) Internationale Anmeldenummer: PCT/EP2012/052932
(87) Internationale Veröffentlichungsnummer: WO 2012/113789

(56) Entgegenhaltungen:
- DE-A1- 10 238 571
- US-A1- 2010 300 192

## Beschreibung

Die Erfindung betrifft ein Verfahren zum Betreiben eines direkten Reifendruckkontrollsystems für ein Kraftfahrzeug. Die Erfindung betrifft ferner ein Reifendruckkontrollsystem für ein Kraftfahrzeug sowie ein Kraftfahrzeug mit einem solchen Reifendruckkontrollsystem.

Herkömmliche direkte Reifendruckkontrollsysteme warnen den Fahrer vor einem Druckverlust und bieten somit mehr Sicherheit. Zudem tragen sie auch zu einer Reduktion von CO₂-Emissionen bei. Bei derartigen Reifendruckkontrollsystemen ist eine Sensorik in jedem Reifen angeordnet. Diese rad- oder reifenmontierte Elektronik, im Folgenden als Radeinheit bezeichnet, kommuniziert typischerweise über eine drahtlose Kommunikationsverbindung mit einer fahrzeugfesten, eine Empfangseinrichtung umfassenden Auswerteeinheit (auch als zentrales Steuergerät bezeichnet).

Das Steuergerät nimmt von den Radeinheiten ausgesendete Datensignale auf und ordnet diese zum Beispiel mit Hilfe eines mitgesendeten Identifizierungscodes einem bestimmten Radsensor zu.

Um die an jedem Rad oder jedem Reifen montierte Radeinheit auch einer bestimmten Radposition des Rades am Kraftfahrzeug zuzuordnen zu können (z.B. vorne links, vorne rechts, hinten links, hinten rechts), sind die verschiedensten Verfahren bekannt, beispielsweise aus der DE 101 44 360 A1, der DE 102 23 214 A1 oder der DE 10 2007 007 200 A1. Eine solche Zuordnung, die allgemein auch als Radlokalisation oder kurz als Lokalisierung bekannt ist, erfolgt typischerweise bei einer so genannten Initialisierung nach dem Einschalten der Zündung oder nach dem Fahrzeugstart. Ohne eine solche Zuordnung zu einer bestimmten Radposition bliebe ansonsten, beispielsweise aufgrund von Radwechsel, Reifenwechseln, Neubereifung etc., unklar, an welcher Radposition sich die aufgrund ihres Identifizierungscodes erkannte Radeinheit befindet. Eine eindeutige Zuordnung ist jedoch sowohl für Auswertungs- und Steuerungsvorgänge innerhalb des Fahrzeuges, als auch für den Fahrer, für Wartungszwecke, etc., wünschenswert und notwendig.

Die so genannte Lokalisierung, d.h. die Identifikation der Zugehörigkeit einer empfangenen Funkinformation zu einem Rad, stellt in der Praxis eine große Herausforderung dar und nimmt auch eine geraume Zeit in Anspruch. Sie wird bei herkömmlichen Reifendruckkontrollsystemen bei jedem Start des Fahrzeugs oder kurz danach durchgeführt.

In der DE 10 2007 046 486 A1 ist ein Reifendruckkontrollsystem beschrieben, die die Zuordnung der Position der jeweiligen Luftdrucksensoren automatisiert, d.h. ohne gesonderten Eingriff durch einen Nutzer, vornimmt, was allerdings auch zeitaufwändig ist. Bleibt ein Fahrzeug längere Zeit stehen, wie etwa beim Parken, dann beginnt die Zuordnung von neuem, da grundsätzlich die Möglichkeit besteht, dass während des Stillstands des Fahrzeugs ein Reifen oder Räder gewechselt wurden. Das System muss daher erneut initialisiert werden, um sicherzustellen, dass die richtigen Reifenpositionen vom Reifendruckkontrollsystem erkannt werden, so dass im Fehlerfall der fehlerhafte Reifendruck auch für die zugehörige Radposition angezeigt wird.

In der DE 10 2004 042 191 B3 ist ein weiteres Reifendruckkontrollsystem beschrieben, bei dem die Radeinheiten lokalisiert werden. Hierbei wird ein Beschleunigungssensor im Reifen verwendet, der bei konstanter Fahrgeschwindigkeit zwischen den Radpositionen links/rechts und vorne/hinten unterscheiden kann. Dabei erfasst der Beschleunigungssensor aufgrund seiner Einbaulage die Beschleunigung in Radumfangsrichtung. Dadurch ist es möglich, mittels Auswertung der entsprechenden Messwerte das jeweilige Rad zu lokalisieren. Allerdings müssen bei einem solchen Reifendruckkontrollsystem zunächst die Räder in Bewegung sein, damit die Initialisierung/Lokalisierung durchgeführt werden kann.

Allen eben genannten bekannten Reifendruckkontrollsystemen ist gemein, dass eine neue eindeutige Lokalisierung der Radeinheiten bei jedem Neustart oder während der Fahrt des Kraftfahrzeugs stattfindet, was typischerweise mehrere Minuten dauert. Während der Lokalisierung können aber keine Reifendruckmesswerte ausgewertet werden. Zumindest kann die zugehörige Radposition nicht eindeutig angegeben werden.

Aus der DE 102 38 571 A1 ist ein Verfahren zum Betreiben eines Reifendruckkontrollsystems für ein Kraftfahrzeug bekannt, bei welchem ein Erkennen eines Stillstandes des Kraftfahrzeugs mittels einer fahrzeugseitig erfassten Fahrzeuggeschwindigkeit während einer Zeitdauer, während der die Fahrzeuggeschwindigkeit definiert Null ist, erfolgt.

Aus der US 2010/300192 A1 ist ein Reifendruckkontrollsystem für ein Fahrzeug bekannt, wobei bei einem erkannten Wechsel von einem montierten Radset zu einem weiteren Radset die Identifikationsdaten von Drucksensoreinheiten des weiteren Radsets automatisch als die Identifikationsdaten der Drucksensoreinheiten identifiziert werden, die an den montierten Rädern des Fahrzeugs befestigt sind.

Vor diesem Hintergrund ist es die Aufgabe der vorliegenden Erfindung, nach dem Neustart eines Kraftfahrzeugs möglichst schnell Reifendruckwerte auswerten und einer Radposition zuordnen zu können.

Diese Aufgabe wird durch ein Verfahren mit den Merkmalen des Patentanspruchs 1 und/oder durch ein Reifendruckkontrollsystem mit den Merkmalen des Patentanspruchs 6 und/oder durch ein Kraftfahrzeug mit den Merkmalen des Patentanspruchs 10 gelöst.

Demgemäß ist vorgesehen:
- Ein Verfahren zum Betreiben eines Reifendruckkontrollsystems für ein Kraftfahrzeug, mit den Schritten: Erkennen eines Stillstandes des Kraftfahrzeugs mittels einer radseitig gemessenen Zentrifugalkraft und/oder einem fahrzeugseitig erfassen Fahrzeuggeschwindigkeit während einer Zeitdauer, während der die Fahrzeuggeschwindigkeit definiert Null ist; Erfassen und fahrzeugseitiges Speichern zumindest einer Beschleunigungskraft in jedem Rad während der Zeitdauer; Erneutes Erfassen zumindest einer Beschleunigungskraft in jedem Rad zumindest am Ende der Zeitdauer, wobei die erfasste Beschleunigungskraft in jedem Rad an ein fahrzeugseitiges Steuergerät übertragen wird und anschließend mit den zu der jeweiligen Radposition gehörigen und zuvor abgespeicherten Beschleunigungskräften verglichen wird; Initialisieren des Lokalisierungsprozesses des Reifendrucksystems nach dem Stillstand des Kraftfahrzeugs bei einer Abweichung der neu gemessenen Beschleunigungskräfte von den zuvor gespeicherten Beschleunigungskräften bei mindestens einer Radposition.
- Ein Reifendruckkontrollsystem für ein Kraftfahrzeug, mit einem fahrzeugseitigen Steuergerät, das dazu ausgelegt ist, radseitige Signale zu empfangen, auszuwerten und zu speichern, mit jeweils einem je einem Rad zugeordneten radseitigen Beschleunigungssensor, der dazu ausgelegt ist, auf das ihm zugeordnete Rad einwirkende Beschleunigungskräfte zu messen und ein Signal, welches die gemessenen Werte enthält, an das Steuergerät zu übertragen; wobei das fahrzeugseitige Steuergerät und die radseitigen Beschleunigungssensoren ferner dazu ausgelegt sind: während einer Zeitdauer, während die Fahrzeuggeschwindigkeit definiert Null beträgt, mittels einer radseitig gemessenen Zentrifugalkraft oder einem fahrzeugseitigen Geschwindigkeitssignal ein Stillstand des Kraftfahrzeugs zu erkennen; radseitig während der Zeitdauer zumindest eine Beschleunigungskraft in jedem Rad zu erfassen und fahrzeugseitig in dem Steuergerät zu speichern; zumindest am Ende der Zeitdauer erneut zumindest eine Beschleunigungskraft in jedem Rad (10) zu erfassen und an das fahrzeugseitige Steuergerät (23) zu übertragen werden, um diese mit den zu der jeweiligen Radposition gehörigen und zuvor abgespeicherten Beschleunigungskräften zu vergleichen; bei einer Abweichung der neu gemessenen Beschleunigungskräfte von den gespeicherten Beschleunigungskräften bei jeweils einer Radposition eine Initialisierung des Reifendrucksystems nach dem Stillstand des Kraftfahrzeugs vorzunehmen.
- Ein Kraftfahrzeug, mit einem erfindungsgemäßen Reifendruckkontrollsystem, mit mehreren Rädern, denen jeweils zumindest ein Beschleunigungssensor des Reifendruckkontrollsystems zugeordnet ist.

Erfindungsgemäß wird also mittels eines radseitig gemessenen Beschleunigungssignals oder einem fahrzeugseitigen Geschwindigkeitssignal eine Zeitdauer erkannt, während der die Fahrzeuggeschwindigkeit etwa Null ist, in dem sich das Kraftfahrzeug im Stillstand befindet. Während dieser Zeitdauer werden dann ein oder mehrere Beschleunigungssignale in jedem Rad erfasst und fahrzeugseitig in dem Steuergerät zu jeder Radposition gespeichert. Am Ende der Zeitdauer oder zwischendurch werden erneut ein oder mehrere Beschleunigungssignale in jedem Rad erfasst und diese mit den zuvor abgespeicherten Beschleunigungssignalen verglichen. Wenn die Abweichung der neu gemessenen Signale von den zuvor gespeicherten Signalen bei jeweils einer Radposition außerhalb eines Toleranzwerts liegt, so wird beim Neustart oder vor dem Anfahren des Kraftfahrzeugs eine neue Initialisierung des Lokalisierungsprozesses des Reifendrucksystems vorgenommen.

Dabei wird zunächst ein Stillstand des Kraftfahrzeugs über ein radseitiges Beschleunigungssignal und/oder über das Geschwindigkeitssignal des Kraftfahrzeugs detektiert. Im Stillstand wird der Wert der radseitigen Beschleunigung erfasst und gespeichert. Wenn der Wert der Beschleunigung mehr als ein Toleranzwert von dem Sollwert abweicht, welcher durch die gemessene Beschleunigung beim Eintritt des Stillstandes gegeben ist, so wird ein Rad- oder Reifenwechsel angenommen. Somit braucht nach dem Start des Kraftfahrzeugs nur dann eine neue Lokalisierung der Radeinheiten durchgeführt zu werden, wenn ein Reifenwechsel angenommen wurde. Ansonsten werden keine Lokalisierung und keine neue Initialisierung benötigt und das Erfassen des Reifendrucks in den Reifen kann sofort starten, wobei dann die gemessenen Reifendruckwerte auch der korrekten Radposition zuordenbar sind.

Vorteilhafte Ausgestaltungen und Weiterbildungen ergeben sich aus den weiteren Unteransprüchen sowie aus der Beschreibung unter Bezugnahme auf die Figuren der Zeichnung.

In einer vorteilhaften Ausgestaltung werden die Beschleunigungskräfte radseitig ein oder mehrmals in zeitlich großen Abständen während der Zeitdauer gemessen. Vorzugsweise werden die Beschleunigungskräfte kontinuierlich mit hoher Abtastrate gemessen werden.

Vorteilhaft ist es, den zeitlichen Verlauf des Beschleunigungssignals während des Stillstands des Kraftfahrzeugs zu erfassen, um auf einen Reifenwechsel zu schließen. Alternativ kann nur die Winkelstellung des Rades mittels Beschleunigungssignal ein- oder mehrmals während der Zeitdauer des Stillstands, d.h. vor dem Start des Kraftfahrzeugs gemessen werden. Die gemessenen Werte werden dann mit den gespeicherten Werten verglichen. Liegt eine Übereinstimmung innerhalb einer Toleranzgrenze vor, wurden die Räder während des Stillstands mit sehr hoher Wahrscheinlichkeit nicht bewegt.

Vorzugsweise werden radseitig lediglich solche Beschleunigungskräfte gemessen, die in radialer Richtung wirken.

Die Fahrzeuggeschwindigkeit kann über die Zentrifugalkraft radseitig mittels des ohnehin vorhandenen Beschleunigungssensors im Reifen oder über das Geschwindigkeitssignal des Kraftfahrzeugs ermittelt werden. Somit kann ein Stillstand des Kraftfahrzeugs sehr sicher erfasst werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild eines erfindungsgemäßen Reifendruckkontrollsystems für ein Kraftfahrzeug,
- Fig. 2: eine Ansicht eines Rades, in welchem ein Radeinheit mit einem Beschleunigungssensor des erfindungsgemäßen Reifendruckkontrollsystems entsprechen Figur 1 angeordnet ist,
- Fig. 3: ein Fahrzeuggeschwindigkeitsdiagramm zum Erkennen eines Stillstands des Kraftfahrzeugs,
- Fig. 4: statische Beschleunigungssignale, die radseitig während des Stillstands gemessen wurden, und
- Fig. 5: dynamische Beschleunigungssignale, die radseitig während des Stillstands gemessen wurden,
- Fig. 6: ein Blockschaltbild für das erfindungsgemäße verfahren zum Betreiben eines Reifendruckkontrollsystems für ein Kraftfahrzeug.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist - jeweils mit denselben Bezugszeichen versehen.

Im Folgenden wird die Erfindung anhand der Verwendung in einem Kraftfahrzeug als Ausführungsbeispiel näher erläutert. Das Reifendruckkontrollsystem kann selbstverständlich nicht nur in Rädern 10 eines Kraftfahrzeugs, sondern auch eines Motorrads, eines Lastkraftwagens oder eines sonstigen Nutzfahrzeugs Verwendung finden. Ebenso ist es möglich, den Reifendruck entsprechend in Flugzeugrädern zu kontrollieren.

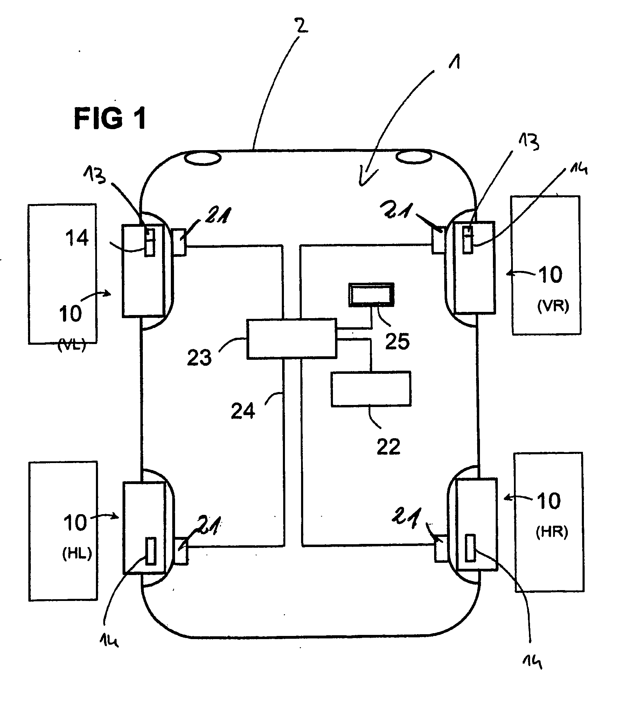

Figur 1 zeigt ein schematisches Blockschaltbild eines erfindungsgemäßen Reifendruckkontrollsystems 1 für ein Kraftfahrzeug 2, mit dem physikalische Rad- oder Reifenzustandsgrößen, wie der Reifendruck, die Reifentemperatur, Latsch, Drehzahl, Radgeschwindigkeit und-beschleunigung eines Kraftfahrzeugrades 10 zu ermitteln und gegebenenfalls dem Fahrer anzuzeigen sind.

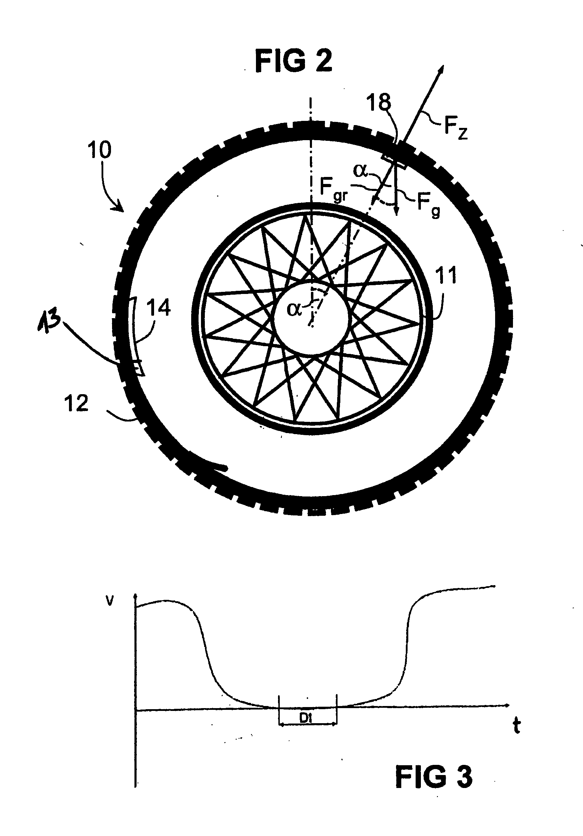

Ein Fahrzeugrad 10 weist üblicherweise eine Felge 11 (siehe Figur 2) mit darauf aufgezogenen Reifen 12 auf. Die Reifen 12 können schlauchlos sein oder auch einen Schlauch aufweisen. Solche Räder 10 mit entsprechenden Reifen 12 können bei vielfältigen Objekten zum Fahren zum Einsatz kommen. Im Folgenden wird nur noch allgemein von einem Rad 10 gesprochen (außer es ist ausdrücklich der Reifen 12 oder die Felge 11 oder ein sonstiges Teil des Rades 10 gemeint).

Das erfindungsgemäße Reifendruckkontrollsystem 1 umfasst radseitige Radelektroniken 14, fahrzeugseitige Sende-/Empfangseinrichtungen 21 sowie ein fahrzeugseitiges Steuergerät 23. Das Sensorelement 13 ist einem Rad zugeordnet und dazu ausgelegt, rad- oder reifenspezifische, physikalische Kenngrößen, wie etwa die oben genannten Rad- oder Reifenzustandsgrößen, zu messen. Die so gemessenen Werte (nachfolgend als Messwerte bezeichnet) werden von einer eigens dafür vorgesehenen Sendeeinrichtung innerhalb der Radelektroniken 14 zu der fahrzeugseitigen Empfangseinheit 21 übermittelt. Von dieser fahrzeugseitigen Empfangseinheit 21 werden entsprechende Daten und Steuersignale über entsprechende fahrzeugseitige Signalleitungen 24, beispielsweise einen Steuer- und Datenbus, an eine weiterverarbeitende Vorrichtung 22, 23 weitergeleitet. Diese Vorrichtung 22, 23 ist zum Beispiel ein fahrzeugseitiges Steuergerät 23, welches typischerweise eine Sende- und/oder Empfangseinheit, eine Auswerteeinheit, eine Steuereinheit, welche eine Recheneinrichtung aufweist, etc., aufweist.

Die Messwerte können von den fahrzeugseitigen Sende-/Empfangseinrichtung 21 zu dem im Kraftfahrzeug angeordneten Steuergerät 23 übertragen werden. Die Messwerte können bedarfsweise auch jedem anderen Steuergerät im Kraftfahrzeug verfügbar gemacht werden, sofern die Messwerte auf einen Datenbus oder Daten/Signalleitungen 24 "gelegt" werden. Umgekehrt können dem Steuergerät 23 Messwerte, die von anderen Steuergeräten 22 im Kraftfahrzeug ermittelt werden, wie beispielsweise die Fahrzeuggeschwindigkeit, mitgeteilt werden, sofern die Steuergeräte 22 auch mit dem Datenbus verbunden sind.

Die fahrzeugseitigen Radelektroniken 14 können diverse Sensoren (wie Drehzahlsensoren), Sende- und Empfangseinheiten und Elektronikeinheiten aufweisen.

Die physikalischen Kenngrößen (Reifendruck, Zentrifugalkraft, Erdanziehungskraft) der Räder 10 können auch radseitig mittels eines direkt messenden Verfahrens im Rad 10 gemessen werden. Hierzu sind in den Rädern 10 Radelektroniken 14 angeordnet, die Sensorelemente 13 (wie Reifendrucksensor, Temperatursensor, Verformungssensor, Beschleunigungssensor 18, etc.), nicht zeichnerisch dargestellte Sende- und Empfangseinheiten sowie Elektronikeinheiten inklusive Energieversorgung in jeweils einem Rad 10, aufweisen können. Die Sensorelemente 13 messen verschiedene physikalische Größen des Rades 10 oder des Reifens 12 unmittelbar, wie beispielsweise Reifendruck, Temperatur, Latschlänge, Beschleunigung und/oder Radlast und übertragen die Messwerte zum Kraftfahrzeug zum Auswerten.

In jedem Rad 10 (vorne links (VL), vorne rechts (VR), hinten links (HL) und hinten rechts (HR)), das sich während der Fahrt dreht, befindet sich eine solche radseitige Radelektronik 14. Die Messwerte werden in einem Signal drahtlos über Antennen oder kontaktbehaftet zu kraftfahrzeugseitigen Empfangseinheiten übertragen.

Dabei ist es jedoch vorteilhaft, wenn die jeweiligen Vorrichtungen im Rad 10 individuell codiert sind, wobei diese Codierung in dem Steuergerät 23 einer dem Rad 10 zugeordneten Radposition zugeordnet wird. Diese Codierung oder auch als reifen- oder radindividuelle Kennung bezeichnet, wird zusammen mit jedem Messwert aus dem Rad 10 zu einer fahrzeugseitigen Empfangseinrichtung übertragen.

Die Zuordnung Kennung - Radposition kann bei einer anfänglichen Initialisierung erstmals zugeordnet oder festgelegt werden. Wenn jeder Codierung oder Kennung bei der Initialisierung eine Radposition zugewiesen wird, so kann später jeder aus den Messwerten ermittelten Radzustandsgröße eine Radposition bei der Auswertung zugeordnet werden. Somit ist immer bekannt, welche Radzustandsgröße zu welcher Radposition gehört und welche physikalische Größe von welchem Rad 10 (-position) oder Reifen 12 stammt.

Die Initialisierung findet nach Einschalten der Zündung oder - je nach Verfahren - nach dem Wegfahren bei Erreichen einer Mindestgeschwindigkeit (größer Null) statt. Eine solche Initialisierung dauert typischerweise etwa 3 bis 8 min.

Die empfangenen Signale werden über Signalleitungen 24 oder einen Datenbus an das Steuergerät 23 weitergegeben. Dort werden alle Daten von allen Radelektroniken 14 ausgewertet. Bei fahrkritischen Situationen kann gegebenenfalls eine entsprechende fahrzeugspezifische Funktion gesteuert werden (entweder unmittelbar durch das Steuergerät 23 oder durch ein weiteres Steuergerät 22, das ohnehin im Kraftfahrzeug angeordnet ist und andere Funktionen steuert, wie beispielsweise ein Motorsteuergerät oder auch ABS-Steuergerät), abhängig von der jeweilig ermittelten Radzustandsgröße. Zusätzlich kann für den Fahrer eine optische oder akustische Anzeigeeinheit 25 aktiviert werden, wodurch der Fahrer auf solche betriebs- oder sicherheitsrelevante Informationen hingewiesen wird, und daher eventuell auch vor zu geringem Reifendruck in einem Reifen 12 gewarnt wird.

Damit die Initialisierung nicht bei jedem Neustart des Kraftfahrzeugs durchgeführt werden muss, wird erfindungsgemäß zunächst festgestellt, ob ein Stillstand des Kraftfahrzeugs vorliegt. Anschließend wird ermittelt, ob während des Stillstands ein oder mehrere Räder 10 bewegt wurden. Wenn die Räder 10 nicht bewegt wurden, so braucht keine neue Initialisierung des Lokalisierungsprozesses vorgenommen zu werden.

Bevor dies entschieden wird, muss zunächst ein Stillstand des Kraftfahrzeugs erkannt werden. Hierzu kann ein Geschwindigkeitssignal, das von einer fahrzeugseitigen Einheit stammt (beispielsweise von einem Motorsteuergerät oder von den fahrzeugseitigen Drehzahlgebern), verwendet werden. Es kann aber zusätzlich oder allein ein radseitiges Signal ausgewertet werden. Beispielsweise kann ein ohnehin in jedem Rad 10 angeordneter Beschleunigungssensor 18 (Figur 2) dazu verwendet werden. Aus der gemessenen Zentrifugalkraft F_{z} kann die Geschwindigkeit v ermittelt werden. Hierzu kann das Beschleunigungssignal in einem oder allen Rädern 10 gemessen werden. Nur wenn alle Räder 10 für eine vorgegebene Zeitdauer in Ruhe sind (Fahrzeuggeschwindigkeit etwa Null), liegt ein Stillstand vor. Die Zündung muss jedoch im Stillstand nicht unbedingt ausgeschaltet sein.

Der Beschleunigungssensor 18 kann an separater Stelle in jedem Reifen 12 (wie in Figur 2 dargestellt) oder zusammen mit weiteren Sensorelementen 13 in einer gemeinsamen Radelektronik 14 in jedem Reifen 12 oder an jedem Rad 10 angeordnet sein.

Ein solcher Beschleunigungssensor 18 misst typischerweise die in jedem Rad 10 individuell wirkende Beschleunigung in zumindest einer Raumrichtung. Wenn die Messrichtung radial ausgebildet ist, so wird einerseits die Zentrifugalkraft F_{z}, gemessen. Dabei ist die Zentrifugalkraft F_{z} immer der Gravitationskraft F_{g} überlagert, da diese ständig wirksam ist und deren radiale Komponente F_{gr} sich sinusförmig abhängig von der Radstellung (Radwinkel α) daraus ergibt. Die radiale Komponente ist die radindividuell projizierte Komponente des Erdbeschleunigungsvektors und liegt zwischen -1 g und 1 g (g = Erdbeschleunigung). Der Beschleunigungssensor 18 muss daher empfindlich genug sein, sowohl die geringe Gravitationskraft (Erdanziehungskraft) als auch die hohe Zentrifugalkraft (bis zu 150 g) während der Fahrt oder sonstige Beschleunigungskräfte (Erschütterungen), die auf das Rad 10 einwirken, korrekt messen zu können. Die sonstigen Beschleunigungskräfte sind üblicherweise größer als 1 g.

Hierbei kann beispielsweise ein handelsüblicher mikromechanischer Beschleunigungssensor 18 verwendet werden, der in radialer Richtung sensitiv ist, um damit sowohl die zentrifugale Beschleunigung (F_{z}) als auch die Erdbeschleunigung (F_{g}) als auch sonstige Beschleunigungskräfte zu messen. Allerdings wird immer nur die radiale Komponente dieser Beschleunigungskräfte gemessen, außer der Beschleunigungssensor 18 ist in mehreren Raumrichtungen sensitiv. Im zweiten Fall können die Richtung der Kraft und deren Wert genau bestimmt werden.

Zum Erkennen eines Stillstands wird die Fahrzeuggeschwindigkeit v gemäß Figur 3 ausgewertet. Hier wurde das Geschwindigkeitssignal v von der von dem Beschleunigungssensor 18 gemessenen Zentrifugalkraft F_{z} abgeleitet. Ein Stillstand des Kraftfahrzeugs, während dessen ein Reifenwechsel oder Radwechsel überhaupt stattfinden kann, zeichnet sich dadurch aus, dass die Fahrzeuggeschwindigkeit v für ein hinreichend großes Zeitintervall Dₜ sicher Null ist. Bei zu kurzem Zeitintervall Dₜ können die Reifen kaum gewechselt werden.

Erfindungsgemäß wird während des Stillstands detektiert, ob die Räder 10 bewegt wurden. Hierzu gibt es mehrere Möglichkeiten des Erkennens.

Wenn das Zeitintervall Dₜ kleiner als ein Grenzwert ist, so kann mit hoher Wahrscheinlichkeit kein Reifenwechsel stattgefunden haben, da die Zeit zu kurz dafür war. In einem solchen Fall wird angenommen, dass sich die Räder 10 nicht verändert haben und sich noch in derselben Position mit demselben Radwinkel α befinden wie zu Beginn des Stillstands. Dann kann die letzte erfolgreich durchgeführte Lokalisierung ohne weiteren Zeitverlust mit entsprechender Gewissheit als verlässliche Information für das Reifendruckkontrollsystem weiter verwendet werden. Somit ist dies wesentlich schneller, als eine neue Initialisierung beim Neustart des Kraftfahrzeugs benötigen würde. Das Reifendruckkontrollsystem kann in diesem Fall von Anfang an Reifendruckwerte auswerten und gegebenenfalls eine Warnung an den Fahrer gegeben, ohne zunächst das Reifendruckkontrollsystem initialisieren zu müssen.

Ist hingegen das Zeitintervall Dₜ größer also dieser Grenzwert (Mindestwert), so könnte durchaus ein Reifenwechsel oder Radwechsel stattfinden. Um einen Rad- oder Reifenwechsel ausschließen zu können, werden die Räder 10 auf Bewegung während des Stillstands überwacht. Während dieser Zeit werden nun erfindungsgemäß die Radwinkel α zu Beginn, gegebenenfalls zwischendurch und am Ende des Zeitintervalls Dₜ überwacht/ermittelt und/oder die tatsächliche Bewegung der Räder 10 während des Zeitintervalls Dₜ über Messung der Beschleunigungskraft Fₐ, die im Bereich des Beschleunigungssensor 18 auf das Rad 10 wirkt, erfasst.

Die erforderlichen Messungen hierzu werden von jedem Beschleunigungssensor 18 in jedem Rad 10 vorgenommen, indem in vorgegebenen zeitlichen Abständen intermittierend die radindividuellen Beschleunigungskräfte gemessen werden.

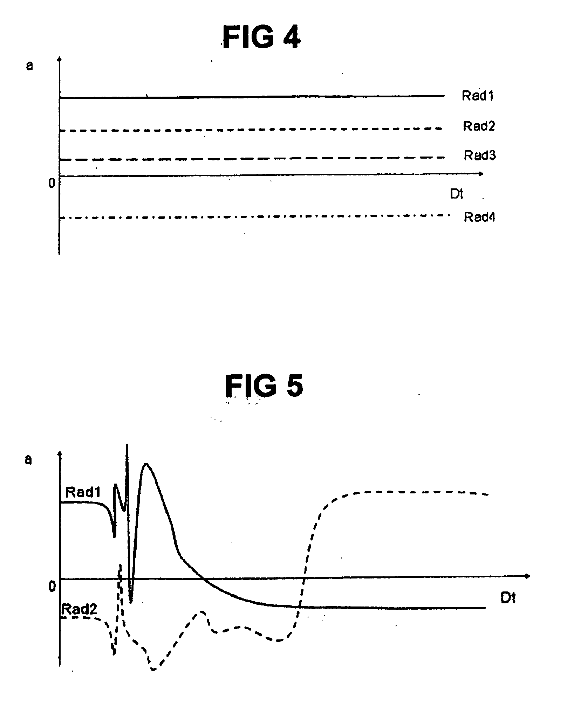

Gemäß Figur 4 wird das Ausführungsbeispiel näher erläutert, bei dem die jeweiligen Beschleunigungswerte a in jedem Rad 10 während des Zeitintervalls Dₜ mit größeren zeitlichen Abständen gemessen werden. Beispielsweise können die Beschleunigungswerte am Anfang und am Ende des Zeitintervalls Dₜ gemessen werden. Dann hängen die gemessenen Beträge/Werte nur vom Radwinkel α ab, d.h. von der jeweiligen Winkelstellung jeden Rades 10 (Rad1 bis Rad4) ab, da die Zentrifugalkraft F_{g} Null ist. Jedes Rad 10 nimmt im Stillstand einen Radwinkel α ein, und zwar gerade so, wie das Rad 10 stehen geblieben ist. Die vier Radwinkel α sind typischerweise unterschiedlich.

Im Stillstand werden für jedes Rad 10 (Rad1 bis Rad4) jeweilige Beschleunigungswerte a ein oder mehrmals während der Zeitdauer Dₜ gemessen. Die gemessenen Werte werden beispielsweise von der radseitigen Radelektronik 14 zum Steuergerät 23 übertragen, wo die Werte für jedes Rad 10 gespeichert werden. Jeder neue Messwert wird für jedes Rad 10 mit dem entsprechenden, zuvor gespeicherten Wert verglichen. Liegt eine Abweichung eines oder mehrerer Werte außerhalb einer vorgegebenen Toleranzgrenze vor, so wird davon ausgegangen, dass das jeweilige Rad 10 während des Stillstands bewegt wurde, da sich der Radwinkel α geändert hat. Sehr kleine Änderungen aller vier Räder 10 gemeinsam in gleicher Größenordnung können ignoriert werden, da sich das Fahrzeug in der Parkstellung ganz gering vorwärts oder rückwärts bewegt haben könnte, z.B. beim Parken an einer Steigung.

Wenn sich zumindest ein Radwinkel α geändert hat, wird davon ausgegangen, dass dieses Rad 10 abmontiert wurde und eventuell durch ein anderes Rad 10 ersetzt wurde. Bei einem Radwechsel oder -tausch beispielsweise des vorderen linken Rades 10 (VL) mit dem vorderen rechten Rad 10 (VR) würden sich daher typischerweise beide Radwinkel α ändern, außer es würde der praktisch sehr unwahrscheinliche Fall eintreten, dass die beiden Radwinkel α nach dem Wechsel zufälligerweise wieder identisch wären. Sobald eine Veränderung des Radwinkels α erkannt wird für eine oder mehrere Radpositionen, wird dann beim nächsten Start des Kraftfahrzeugs eine neue Initialisierung des Lokalisierungsprozesses vorgenommen, bei der dann wieder jeder radseitigen Radelektronik eine Codierung oder Kennung entsprechend der individuellen Radposition zugewiesen wird.

Bei der Erfassung des Radwinkels α genügt es zumindest jeweils einen Beschleunigungswert a jeweils jeden Rades 10 während des Stillstands (des Zeitintervalls Dₜ) zu erfassen und zu speichern. Beim Einschalten der Zündung oder beim Öffnen des Kraftfahrzeugs kann dann für jedes Rad 10 wiederum ein Beschleunigungswert a erfasst werden und mit den gespeicherten Werten verglichen werden. Somit wird Energie gespart gegenüber einer kontinuierlichen Messung oder intermittierender Messung mit zeitlich größeren Abständen. Selbstverständlich können die Beschleunigungswerte a auch intermittierend mit mehr oder weniger kurzen zeitlichen Abständen erfasst werden.

Alternativ oder zusätzlich können die tatsächlichen Beschleunigungswerte a während des Stillstands ständig intermittierend mit ganz kurzen zeitlichen Abständen öfter gemessen werden. Allerdings sollten dann die Beschleunigungssensoren 18 hinreichend sensitiv sein, um sowohl kleine langsame Bewegungen als auch große und schnelle Bewegungen als Beschleunigungswerte a messen zu können.

In Figur 5 sind die Beschleunigungswerte a für zwei Räder 10 (Rad1 durchgezogene Linie und Rad2 gestrichelte Linie) während des Zeitintervalls Dₜ über der Zeit für den Fall dargestellt, dass bei den zwei Rädern 10 während des Zeitintervalls Dₜ ein Radwechsel stattgefunden hat. Beim Radwechsel werden die Räder 10 in ihrer Position getauscht, beispielsweise wird das Rad 10 vorne rechts mit dem Rad 10 vorne links getauscht. Der Übersichtlichkeit halber wurden die gemessenen Beschleunigungswerte a für die beiden anderen Räder 10 nicht dargestellt.

Wenn die Räder 10 während des Zeitintervalls Dₜ nicht bewegt werden (Ruhezustand), bleibt der Beschleunigungswert a konstant (erster konstanter Abschnitt für die Kurven der Beschleunigungswerte a entsprechend einem konstanten Radwinkel α). Denn hier wirkt nur die Gravitationskraft F_{g}, die - da in radialer Richtung nur der radiale Anteil F_{gr} gemessen wird - vom Betrag her vom Radwinkel α abhängig ist. Für Rad1 wird zunächst ein positiver Wert für radiale Komponente der Gravitationskraft F_{gr} gemessen (abhängig vom momentanen Radwinkel α) und für Rad2 ein negativer Wert.

Wird ein Rad 10 jedoch bewegt, d.h. abmontiert und zu einer anderen Stele getragen, so wirken neben der konstanten Gravitationskraft F_{g} auch noch sonstige Beschleunigungskräfte Fₐ (Erschütterungen), die in beliebiger Richtung wirken können und sich der Gravitationskraft F_{g} überlagern. Die Beschleunigungskräfte Fₐ können sich je nach Bewegung stärker oder schneller über der Zeit ändern, wie beispielhaft in Figur 5 durch die mehr oder weniger großen Ausschläge des Beschleunigungssignals a nach oben und unten dargestellt ist.

Wenn die Räder 10 wieder montiert und in Ruhe sind, so ändert sich der Beschleunigungswert a nicht mehr und bleibt weitgehend konstant (letzter Abschnitt der Beschleunigungswerte a in Figur 5) . Hier wirkt nun wieder allein die Gravitationskraft F_{g}, deren gemessener Betrag wiederum nur vom aktuellen Radwinkel α abhängt. Für Rad2 wird dann eine große positive Gravitationskraft F_{gr} gemessen und für Rad1 eine kleine negative Gravitationskraft F_{gr}.

Bei der ständigen Messung der Beschleunigungswerte a können toleranzbedingte Messfehler unberücksichtigt bleiben oder mittels mathematischer Methoden, wie Mittelwertbildung oder kleinste oder größte Messwertausreißer unberücksichtigt lassen, etc. korrigiert werden.

Bewegungen (nicht nur die Drehbewegung) oder Erschütterungen der Räder 10 lassen sich also durch die zeitliche Veränderung der Beschleunigungssignale erkennen. Die Ursachen für die veränderlichen Beschleunigungswerte a können die Handhabung bei der Montage sein, wodurch eine zeitlich begrenzte Beschleunigung hervorgerufen wird. Diese schnelle Beschleunigungsänderung kann durch eine hinreichend hohe Abtastrate des Beschleunigungssensors 18 erkannt werden. Anderseits kann sich die Orientierung des Rades 10/Reifens 12 zum Erdgravitationsfeld (d.h. abhängig vom Radwinkel α) üblicherweise dann ändern, wenn das Rad 10 abgenommen und wieder an derselben oder an einer anderen Position montiert wird. Somit ist auch durch Vergleich der gemessenen Radwinkel α zu Beginn des Zeitintervalls Dₜ und zum Ende erkennbar, ob ein Rad 10 während der Zeitdauer Dₜ bewegt wurde.

Es können auch beide Messverfahren kombiniert werden, um eine Bewegung der Räder 10 sicher zu erkennen oder ausschießen zu können. Damit wird ausgeschlossen, dass auch bei zufälligerweise identischem Radwinkel α (kommt praktisch kaum vor) vor und nach einem Radwechsel der Radwechsel als solcher erkannt wird.

Das Rad 10 nimmt nach dem Wechsel in aller Regel einen anderen Radwinkel α ein, so dass dann ein gegenüber vor dem Radwechsel anderer konstanter Beschleunigungswert a gemessen wird. Eine solche Änderung lässt sich auch durch eine niedrige Abtastrate (große zeitliche Abstände von Minuten oder Stunden) erkennen, da die konstanten Beschleunigungswerte a (entsprechend dem entsprechenden Radwinkel α) länger andauernd vorhanden sind bzw. ständig während des Stillstands des Kraftfahrzeugs vorliegen.

Wird also eine Änderung der Beschleunigungswerte a zumindest an einem Rad 10 erkannt, kann diese Veränderung über die radseitige Radelektronik zum Steuergerät 23 gesendet werden. Das Steuergerät 23 veranlasst dann eine Initialisierung beim nächsten Start des Kraftfahrzeugs. Ansonsten wird nicht von einem Rad- oder Reifenwechsel ausgegangen und eine neue Initialisierung braucht nicht durchgeführt zu werden. Die einzelnen Messwerte können aber auch direkt zum Steuergerät 23 gesendet werden. Eine Auswertung, ob eine Änderung der Beschleunigungswerte a stattgefunden hat, findet dann im Steuergerät 23 statt. Das Steuergerät 23 veranlasst dann abhängig vom Ergebnis des Vergleichs eine Initialisierung.

Nur in den Fällen, in denen eine Änderung in den Radpositionen ausgeschlossen werden kann, muss nicht auf eine neue Initialisierung gewartet werden. Denn die letzte Initialisierung mit der korrekten Lokalisierung der Räder 10 ist mit sehr hoher Sicherheit noch gültig. Es kann aber auch vorgesehen sein, dass nur dann eine neue Initialisierung vorgenommen wird, wenn sich zumindest bei zwei Rädern 10 Änderungen in den Beschleunigungswerten a während es Stillstands ergeben. Somit könnte dann auch bei einem Plattfuß, bei dem nur das der eine Reifen/Rad abmontiert, der Platten behoben und das Rad 10 wieder an dieselbe Radposition montiert wird, keine neue Initialisierung durchgeführt wird, da trotz Bewegung eines einzigen Rades davon ausgegangen wird, dass alle Räder 10 wird an ihrer vorherigen Radposition sind. Dass die Radelektronik in dem bewegten Rad immer noch dieselbe ist, kann z. B. durch ihren eindeutigen Identifizierungscode ermittelt und verifiziert werden.

Wenn ein Rad 10 durch ein Neues oder ein Reifen 12 durch einen neuen Reifen 12 ersetzt werden, so muss immer eine Initialisierung stattfinden, da das neue Rad 10 mit seiner Kennung nicht dem Reifendruckkontrollsystem bekannt ist. Denn ein neues Rad 10 oder Reifen 12 weist eine Radelektronik auf, die noch nicht von dem Reifendruckkontrollsystem erfasst ist und daher immer eine Initialisierung erstmalig durchgeführt werden muss.

Ob eine Änderung der Beschleunigungswerte a stattgefunden hat, kann mittels geläufiger und bekannter mathematischer Methoden, wie Standardabweichung, Variation, quadratischer Mittelwert RMS, Differenzbildung, Mittelwertbildung, etc. ausgewertet werden. Messfehler können daher für die Bestimmung der Bewegung eines Rades 10 unberücksichtigt bleiben.

Nur wenn festgestellt wird, dass ein Rad 10 eindeutig während des Stillstands bewegt wurde, sollte die neue Initialisierung vorgenommen werden. Andernfalls braucht keine Initialisierung nach einem Stillstand durchgeführt zu werden. Während der Lebensdauer des Kraftfahrzeugs kommt es wesentlich öfter zu Stillständen des Kraftfahrzeugs, bei denen keine Räder 10 gewechselt werden. In diesen Fällen wird bei herkömmlichen Reifendruckkontrollsystemen nach jedem Fahrzeugstart neu initialisiert.

Daher wird mit dem erfindungsgemäßen Reifendruckkontrollsystem viel Zeit gespart, die ansonsten für neue Initialisierungen nach einem Stillstand verwendet würde. Dies steigert auch die Sicherheit und Zuverlässigkeit, da das Reifendruckkontrollsystem schneller einsatzfähig ist. Denn in den allermeisten Fällen können die Reifendruckwerte beim vorliegenden Reifendruckkontrollsystem von Anfang an ohne Initialisierung nach einem Stillstand des Kraftfahrzeugs erfasst werden.

Falls eine Initialisierung vorgenommen wird, so kann sie mit den aus dem Stand der Technik bekannten Verfahren vorgenommen werden. Ebenso können die Verfahren zum Erkennen des Reifendrucks oder sonstiger Radgrößen entsprechend der bekannten Verfahren durchgeführt werden.

Wenn von radseitigen oder reifenseitigen Vorrichtungen gesprochen wird, so ist ein Ort am Rad 10 gemeint, unabhängig davon, wo genau das Objekt angeordnet ist (innerhalb oder außerhalb des Reifens 12, an der Felge 11, etc). Die Objekte außerhalb des Rades 10, aber im Kraftfahrzeug werden als fahrzeugseitig bezeichnet (beispielsweise Objekte am Radkasten in der Nähe der Räder 10 oder am Federbein).

Unter dem Begriff "Radwinkel α" ist die winkelmäßige Stellung eines Rades 10 zu verstehen. Der Radwinkel α ist der Winkel zwischen dem Vektor der vertikalen Gravitationskraft F_{g} und der Radiallinie, die von der Mittelachse des Rades 10 durch den Beschleunigungssensor 18 führt. Da der Beschleunigungssensor 18 hier nur in radialer Richtung sensitiv ist, werden nur die Kraftanteile oder Beschleunigungsanteile in radialer Richtung gemessen, beispielsweise die jeweilige radiale Komponente der konstanten Gravitationskraft F_{g} oder die sonstigen Beschleunigungskräfte, die auf den Beschleunigungssensor 18 einwirken (beispielsweise beim bewegen des Rades 10).

Der Beschleunigungssensor 18 ist in jedem Rad 10 angeordnet, d.h. im Reifen 12 oder auch an der Felge. Seine Messwerte für die auf das Rad 10 wirkenden Beschleunigungskräfte werden an das fahrzeugseitige Steuergerät 23 übertragen und dort ausgewertet. Vorteilhaft ist es, wenn ohnehin bereits ein Beschleunigungssensor 18 in einem Rad 10 oder Reifen 12 angeordnet ist. Denn dann kann dieser Beschleunigungssensor 18 verwendet werden, um eine Bewegung eines Rades 10 während des Stillstands des Kraftfahrzeugs zu erkennen. Es wird also kein zusätzlicher Hardware-Aufwand für das Reifendruckkontrollsystem benötigt. Solche Beschleunigungssensoren 18 können typischerweise auch dafür verwendet werden, die Radelektronik 14 erst dann einzuschalten, wenn sich die Räder 10 drehen und daher eine Zentrifugalkraft F_{z} wirkt. Somit wird Energie in den Radelektroniken 14 eingespart. Die Beschleunigungswerte a können mit dem Beschleunigungssensor 18 im Stillstand gemessen und dort solange gespeichert bleiben, bis sie mittels der Radelektronik 14 zum Steuergerät 23 übertragen werden können. Das Steuergerät 23 übernimmt dann die Auswertung der Beschleunigungssignale a und die Bewertung, ob eine Initialisierung durchgeführt werden sollte oder nicht.

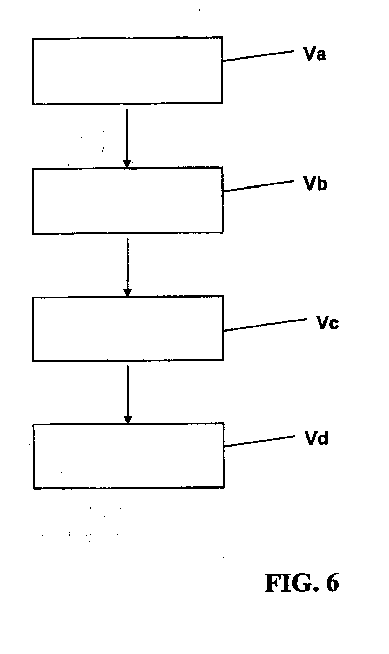

Fig. 6 zeigt ein Blockschaltbild für das erfindungsgemäße verfahren zum Betreiben eines Reifendruckkontrollsystems für ein Kraftfahrzeug. Das verfahren umfasst die folgenden Schritte:

### Schritt Va:

Erkennen eines Stillstandes des Kraftfahrzeugs mittels einer radseitig gemessenen Zentrifugalkraft F_{z} und/oder einem fahrzeugseitig erfassen Fahrzeuggeschwindigkeit v. Dies erfolgt während einer definierten Zeitdauer Dₜ, während der die Fahrzeuggeschwindigkeit definiert Null ist.

### Schritt Vb:

Erfassen zumindest einer Beschleunigungskraft F_{g}, F_{z}, Fₐ in jedem Rad 10 während der eben genannten definierten Zeitdauer Dₜ. Die erfasste Beschleunigungskraft F_{g}, F_{z}, Fₐ wird ferner fahrzeugseitig, beispielsweise im fahrzeugseitigen Steuergerät, gespeichert.

Dabei misst der Sensor typischerweise lediglich eine Beschleunigungskomponente oder eine entsprechende Kraft, welche sich aus den Unterkomponenten der Kraft zusammensetzt. Beispielsweise setzt sich die Beschleunigungskraft Fₐ = F_{gr} + F_{z} + Fₑₓₜₑᵣₙ zusammen, wobei Fₑₓₜₑᵣₙ die Krafteinwirkung beim aktiven Reifenwechsel darstellt. Wesentlich dabei ist, dass die einzelnen Unterkomponenten einer gemessenen Beschleunigungskomponente oder Kraft nicht separat erfasst werden können. Lediglich die eigentliche Beschleunigungskomponente, beispielsweise der Beschleunigungskraft Fₐ, wird erfasst.

### Schritt Vc:

Erneutes Erfassen zumindest einer Beschleunigungskraft F_{g}, F_{z},
Fₐ in jedem Rad 10. Das erneute Erfassen erfolgt dabei zumindest am Ende der Zeitdauer Dₜ. Die erfassten Beschleunigungskräfte F_{g}, F_{z}, Fₐ wird an ein fahrzeugseitiges Steuergerät 23 übertragen und
anschließend mit den zu der jeweiligen Radposition gehörigen und zuvor abgespeicherten Beschleunigungskräften F_{g}, F_{z}, Fₐ verglichen.

### Schritt Vd:

Initialisieren des Reifendruckkontrollsystems nach dem Stillstand des Kraftfahrzeugs im Falle einer (vorgegebenen oder
vorgebbaren) Abweichung der neu gemessenen Beschleunigungskräfte F_{g}, F_{z}, Fₐ von den zuvor gespeicherten Beschleunigungskräften F_{g}, F_{z}, Fₐ bei jeweils einer Radposition.

### Bezugszeichenliste

- 1: Reifendruckkontrollsystem
- 2: Kraftfahrzeug
- 10: Rad
- 11: Felge
- 12: Reifen
- 13: Sensorelement
- 14: radseitige Radelektronik
- 18: Beschleunigungssensor
- 21: fahrzeugseitige Radelektronik
- 22: Steuergerät
- 23: Steuergerät des Reifendruckkontrollsystems
- 24: Signalleitungen
- 25: Anzeigeeinheit

- a: Beschleunigungssignal
- α: Radwinkel
- Dₜ: Zeitintervall
- Fₐ: Beschleunigungskraft
- F_{g}: Gravitationskraft
- F_{gr}: radiale Komponente der Gravitationskraft
- F_{z}: Zentrifugalkraft
- t: Zeit
- v: Fahrzeuggeschwindigkeit

- Va - Vd: Verfahrensschritte

## Patentansprüche

1. Verfahren zum Betreiben eines Reifendruckkontrollsystems (1) für ein Kraftfahrzeug (2), mit den Schritten:
(a) Erkennen eines Stillstandes des Kraftfahrzeugs mittels einer radseitig gemessenen Zentrifugalkraft (F_{z}) und/oder einer fahrzeugseitig erfassten Fahrzeuggeschwindigkeit (v) während einer Zeitdauer (Dₜ), während der die Fahrzeuggeschwindigkeit definiert Null ist;
**gekennzeichnet durch** die Schritte:
(b) Erfassen und fahrzeugseitiges Speichern zumindest einer Beschleunigungskraft (F_{g}, F_{z}, Fₐ) in jedem Rad (10) während der Zeitdauer (Dₜ);
(c) Erneutes Erfassen zumindest einer Beschleunigungskraft (F_{g}, F_{z}, Fₐ) in jedem Rad (10) zumindest am Ende der Zeitdauer (Dₜ), wobei die erneut erfasste Beschleunigungskraft (F_{g}, F_{z}, Fₐ) in jedem Rad (10) an ein fahrzeugseitiges Steuergerät (23) übertragen wird und anschließend mit den zu der jeweiligen Radposition gehörigen und zuvor abgespeicherten Beschleunigungskräften (F_{g}, F_{z}, Fₐ) verglichen wird;
(d) Initialisieren des Lokalisierungsprozesses des Reifendruckkontrollsystems nach dem Stillstand des Kraftfahrzeugs bei einer Abweichung der neu gemessenen Beschleunigungskräfte (F_{g}, F_{z}, Fₐ) von den zuvor gespeicherten Beschleunigungskräften (F_{g}, F_{z}, Fₐ) bei mindestens einer Radposition.

2. Verfahren nach Anspruch 1,
**dadurch gekennzeichnet,**
**dass** die Beschleunigungskräfte (F_{g}, F_{z}, Fₐ) radseitig ein oder mehrmals in zeitlich großen Abständen während der Zeitdauer (Dₜ) gemessen werden.

3. Verfahren nach einem der vorherigen Ansprüche,
**dadurch gekennzeichnet,**
**dass** die Beschleunigungskräfte (F_{g}, F_{z}, Fₐ) kontinuierlich mit hoher Abtastrate gemessen werden.

4. Verfahren nach einem der vorherigen Ansprüche,
**dadurch gekennzeichnet,**
**dass** radseitig lediglich Beschleunigungskräfte (F_{g}, F_{z}, Fₐ) in radialer Richtung gemessen werden.

5. Verfahren nach einem der vorherigen Ansprüche,
**dadurch gekennzeichnet,**
**dass** zum Erkennen eines Stillstands des Kraftfahrzeugs fahrzeugseitige Geschwindigkeitssignale (v) und/oder radseitig von dem Beschleunigungssensor (18) gemessene Zentrifugalbeschleunigungen (F_{z}) verwendet werden.

6. Reifendruckkontrollsystem (1) für ein Kraftfahrzeug (2),
mit einem fahrzeugseitigen Steuergerät (23), das dazu ausgelegt ist, radseitige Signale aufzunehmen, auszuwerten und zu speichern,
mit zumindest einem jeweils einem Rad (10) zugeordneten radseitigen Beschleunigungssensor (18), der dazu ausgelegt ist, auf das ihm zugeordnete Rad (10) einwirkende Beschleunigungskräfte (F_{g}, F_{z}, Fₐ) zu messen und ein Signal, welches die gemessenen Werte enthält, an das Steuergerät zu übertragen,
wobei das Steuergerät (23) und die Beschleunigungssensoren (18) dazu ausgelegt sind:
- während einer Zeitdauer (Dₜ), während die Fahrzeuggeschwindigkeit definiert Null beträgt, mittels einer radseitig gemessenen Zentrifugalkraft (F_{z}) oder einem fahrzeugseitigen Geschwindigkeitssignal (v) ein Stillstand des Kraftfahrzeugs zu erkennen,
**dadurch gekennzeichnet, dass** das Steuergerät (23) und die Beschleunigungssensoren (18) dazu ausgelegt sind
- radseitig während der Zeitdauer (Dₜ) zumindest eine Beschleunigungskraft (F_{g}, F_{z}, Fₐ) in jedem Rad (10) zu erfassen und fahrzeugseitig in dem Steuergerät (23) zu speichern,
- zumindest am Ende der Zeitdauer (Dₜ) erneut zumindest eine Beschleunigungskraft (F_{g}, F_{z}, Fₐ) in jedem Rad (10) zu erfassen und an das fahrzeugseitige Steuergerät (23) zu übertragen werden, um diese mit den zu der jeweiligen Radposition gehörigen und zuvor abgespeicherten Beschleunigungskräften (F_{g}, F_{z}, Fₐ) zu vergleichen,
- bei einer Abweichung der neu gemessenen Beschleunigungskräfte (F_{g}, F_{z}, Fₐ) von den gespeicherten Beschleunigungskräften (F_{g}, F_{z}, Fₐ) bei jeweils einer Radposition eine Initialisierung des Reifendrucksystems nach dem Stillstand des Kraftfahrzeugs vorzunehmen.

7. Reifendruckkontrollsystem nach Anspruch 6,
**dadurch gekennzeichnet,**
**dass** der Beschleunigungssensor (18) im oder an der Innenseite eines Reifens (12) angeordnet ist, wobei der Beschleunigungssensor (18) lediglich sensitiv für Beschleunigungskräfte (F_{g}, F_{z}, Fₐ) in radialer Richtung ist.

8. Reifendruckkontrollsystem nach einem der vorherigen systembezogenen Ansprüche,
**dadurch gekennzeichnet,**
**dass** zumindest ein fahrzeugseitiger Geschwindigkeitssensor vorgesehen ist, der dazu ausgelegt ist, eine Fahrzeuggeschwindigkeit (v) zum Erkennen eines Stillstands des Kraftfahrzeugs zu erfassen.

9. Reifendruckkontrollsystem nach einem der vorherigen systembezogenen Ansprüche,
**dadurch gekennzeichnet,**
**dass** Beschleunigungssensor (18) einen Zentrifugalbeschleunigungssensor aufweist, der dazu ausgelegt ist, eine Fahrzeuggeschwindigkeit (v) zum Erkennen eines Stillstands des Kraftfahrzeugs durch Erfassen der Zentrifugalbeschleunigung (F_{z}) eines dem Beschleunigungssensor (18) zugeordneten Rades (10) zu erfassen.

10. Kraftfahrzeug,
mit einem Reifendruckkontrollsystem nach einem der Ansprüche 6 bis 9,
mit mehreren Rädern (10), denen jeweils zumindest ein Beschleunigungssensor (18) des Reifendruckkontrollsystems zugeordnet ist.

## Claims

1. Method for operating a tire pressure monitoring system (1) for a motor vehicle (2), comprising the steps:
(a) detecting a stationary state of the motor vehicle by means of a centrifugal force (F_{z}) measured on the wheel side and/or a vehicle speed (v) sensed on the vehicle side for a time period (Dₜ) during which the vehicle speed is defined as being zero;
**characterized by** the steps:
(b) sensing and storing on the vehicle side at least one acceleration force (F_{g}, F_{z}, Fₐ) at each wheel (10) during the time period (Dₜ);
(c) renewed sensing of at least one acceleration force (F_{g}, F_{z}, Fₐ) at each wheel (10) at least at the end of the time period (Dₜ), wherein the newly sensed acceleration force (F_{g}, F_{z}, Fₐ) at each wheel (10) is transmitted to a vehicle-side control device (23) and subsequently compared with the previously stored acceleration forces (F_{g}, F_{z}, Fₐ) which are associated with the respective wheel position;
(d) initializing the location determining process of the tire pressure monitoring system after the stationary state of the motor vehicle in the case of a deviation of the newly measured acceleration forces (F_{g}, F_{z}, Fₐ) from the previously stored acceleration forces (F_{g}, F_{z}, Fₐ) for at least one wheel position.

2. Method according to Claim 1,
**characterized**
**in that** the acceleration forces (F_{g}, F_{z}, Fₐ) are measured on the wheel side one or more times at chronologically long intervals during
the time period (Dₜ).

3. Method according to one of the preceding claims, **characterized**
**in that** the acceleration forces (F_{g}, F_{z}, Fₐ) are measured continuously at a high sampling rate.

4. Method according to one of the preceding claims, **characterized**
**in that** only acceleration forces (F_{g}, F_{z}, Fₐ) in the radial direction are measured on the wheel side.

5. Method according to one of the preceding claims, **characterized**
**in that** vehicle-side speed signals (v) and/or centrifugal accelerations (F_{z}) which are measured on the wheel side by the acceleration sensor (18) are used to detect a stationary state of the motor vehicle.

6. Tire pressure monitoring system (1) for a motor vehicle (2),
having a vehicle-side control device (23) which is configured to pick-up wheel-side signals, and evaluate and store them, having at least one wheel-side acceleration sensor (18) which is respectively assigned to a wheel (10) and is configured to measure acceleration forces (F_{g}, F_{z}, Fₐ) acting on the wheel (10) assigned to said acceleration sensor (18), and to transmit to the control device a signal which contains the measured values,
wherein the control device (23) and the acceleration sensors (18) are configured:
- to detect a stationary state of the motor vehicle during a time period (Dₜ) during which the vehicle speed is defined as being zero, by means of a centrifugal force (F_{z}) measured on the wheel side or a vehicle-side speed signal (v),
**characterized in that** the control device (23) and the acceleration sensors (18) are configured:
- to sense on the wheel side at least one acceleration force (F_{g}, F_{z}, Fₐ) at each wheel (10) during the time period (Dₜ) and to store said acceleration force (F_{g}, F_{z}, Fₐ) in the control device (23) on the vehicle side,
- to sense again at least one acceleration force (F_{g}, F_{z}, Fₐ) at each wheel (10) at least at the end of the time period (Dₜ) and to transmit said acceleration force (F_{g}, F_{z}, Fₐ) to the vehicle-side control device (23) in order to compare said acceleration force (F_{g}, F_{z}, Fₐ) with the previously stored acceleration forces (F_{g}, F_{z}, Fₐ) which are associated with the respective wheel position,
- and in the event of deviation of the newly measured acceleration forces (F_{g}, F_{z}, Fₐ) from the stored acceleration forces (F_{g}, F_{z}, Fₐ) to perform initialization of the tire pressure system at one wheel position in each case, after the stationary state of the motor vehicle.

7. Tire pressure monitoring system according to Claim 6, **characterized**
**in that** the acceleration sensor (18) is arranged in or on the inside of a tire (12), wherein the acceleration sensor (18) is sensitive only to acceleration forces (F_{g}, F_{z}, Fₐ) in the radial direction.

8. Tire pressure monitoring system according to one of the preceding, system-related claims,
**characterized**
**in that** at least one vehicle-side speed sensor is provided which is configured to sense a vehicle speed (v) for detecting a stationary state of the motor vehicle.

9. Tire pressure monitoring system according to one of the preceding, system-related claims,
**characterized**
**in that** the acceleration sensor (18) has a centrifugal acceleration sensor which is configured to sense a vehicle speed (v) in order to detect a stationary state of the motor vehicle by sensing the centrifugal acceleration (F_{z}) of a wheel (10) which is assigned to the acceleration sensor (18).

10. Motor vehicle,
having a tire pressure monitoring system according to one of Claims 6 to 9,
having a plurality of wheels (10) which are each assigned at least one acceleration sensor (18) of the tire pressure monitoring system.

## Revendications

1. Procédé d'exploitation d'un système (1) de contrôle de la pression des pneumatiques pour un véhicule à moteur (2), comportant les étapes :
(a) reconnaissance d'un arrêt du véhicule à moteur à l'aide d'une force centrifuge (F_{z}) mesurée côté roue et/ou d'une vitesse du véhicule (v), détectée côté véhicule, pendant une durée (Dₜ), au cours de laquelle la vitesse du véhicule est définie à zéro ;
**caractérisé par** les étapes :
(b) détection et enregistrement côté véhicule d'au moins une force d'accélération (F_{g}, F_{z}, Fₐ) dans chaque roue (10) pendant la durée (Dₜ) ;
(d) nouvelle détection d'au moins une force d'accélération (F_{g}, F_{z}, Fₐ) dans chaque roue (10) au moins à la fin de la durée (Dₜ), la force d'accélération nouvellement détectée (F_{g}, F_{z}, Fₐ) dans chaque roue (10) étant transférée à un appareil de commande (23) côté véhicule, et étant ensuite comparée aux forces d'accélération (F_{g}, F_{z}, Fₐ) appartenant à la position de roue correspondante et enregistrées au préalable ;
(d) initialisation du processus de localisation du système de contrôle de la pression des pneumatiques après l'arrêt du véhicule à moteur en présence d'un écart, d'au moins une position de roue, entre les forces d'accélération nouvellement mesurées (F_{g}, F_{z}, F₃), et les forces d'accélération enregistrées au préalable (F_{g}, F_{z}, Fₐ).

2. Procédé selon la revendication 1, **caractérisé en ce que** les forces d'accélération (F_{g}, F_{z}, Fₐ) sont mesurées côté roue une ou plusieurs fois, à des intervalles temporels importants, pendant la durée (Dₜ).

3. Procédé selon l'une des revendications précédentes, **caractérisé en ce que** les forces d'accélération (F_{g}, F_{z}, Fₐ) sont mesurées en continu à une grande fréquence d'échantillonnage.

4. Procédé selon l'une des revendications précédentes, **caractérisé en ce que**, côté roue, seules sont mesurées les forces d'accélération (F_{g}, F_{z}, Fₐ) dans la direction axiale.

5. Procédé selon l'une des revendications précédentes, **caractérisé en ce que**, pour la reconnaissance d'un arrêt du véhicule à moteur, on utilise des signaux de vitesse (v) côté véhicule et/ou des accélérations centrifuges (F_{z}) mesurées côté roue par le capteur d'accélération (18).

6. Système (1) de contrôle de la pression des pneumatiques pour un véhicule à moteur (2),
comportant un appareil de commande (23) côté véhicule, qui est configuré pour capter, évaluer et enregistrer des signaux côté roue,
comportant un ou plusieurs capteurs d'accélération (18), côté roue, affecté (s) chacun à une roue (10) et qui est (sont) configuré(s) de façon à mesurer les forces d'accélération (F_{g}, F_{z}, Fₐ) agissant sur la roue (10) qui lui (leur) est affectée, et pour transférer à l'appareil de commande un signal qui contient les valeurs mesurées,
l'appareil de commande (23) et les capteurs d'accélération (18) étant configurés
- pour, pendant une durée (Dₜ) au cours de laquelle la vitesse du véhicule est définie à zéro, reconnaître à l'aide d'une force centrifuge (F_{z}) mesurée côté roue ou d'un signal de vitesse (v) côté véhicule, un arrêt du véhicule à moteur,
**caractérisé en ce que** l'appareil de commande (23) et les capteurs d'accélération (18) sont configurés pour
- détecter côté roue, pendant la durée (Dₜ), au moins une force d'accélération (F_{g}, F_{z}, Fₐ) dans chaque roue (10), et l'enregistrer côté véhicule dans l'appareil de commande (23),
- au moins à la fin de la durée (Dₜ), détecter de nouveau au moins une force d'accélération (F_{g}, F_{z}, Fₐ) dans chaque roue (10), et la transférer à l'appareil de commande (23) côté véhicule, pour comparer cette dernière aux forces d'accélération (F_{g}, F_{z}, Fₐ) appartenant à la position de roue correspondante et stockées au préalable,
- en présence d'un écart entre les forces d'accélération (F_{g}, Fz, Fₐ) nouvellement mesurées et les forces d'accélération (F_{g}, F_{z}, Fₐ) stockées, prévoir, sur chaque position de roue, une initialisation du système de pression des pneumatiques après l'arrêt du véhicule à moteur.

7. Système de contrôle de la pression des pneumatiques selon la revendication 6, **caractérisé en ce que** le capteur d'accélération (18) est disposé dans un pneumatique (12) ou sur son côté intérieur, le capteur d'accélération (18) n'étant sensible qu'aux forces d'accélération (F_{g}, F_{z}, Fₐ) dans la direction radiale.

8. Système de contrôle de la pression des pneumatiques selon l'une des revendications précédentes, **caractérisé en ce qu'**est prévu au moins un capteur de vitesse côté véhicule, qui est configuré pour détecter une vitesse du véhicule (v) dans le but de reconnaître un arrêt du véhicule à moteur.

9. Système de contrôle de la pression des pneumatiques selon l'une des revendications précédentes, **caractérisé en ce que** le capteur d'accélération (18) comprend un capteur d'accélération centrifuge, qui est configuré pour détecter une vitesse (v) du véhicule dans le but de reconnaître un arrêt du véhicule à moteur sous l'effet de la détection de l'accélération centrifuge (F_{z}) d'une roue (10) affectée au capteur d'accélération (18).

10. Véhicule à moteur,
comportant un système de contrôle de la pression des pneumatiques selon l'une des revendications 6 à 9,
comportant plusieurs roues (10), à chacune desquelles est affecté au moins un capteur d'accélération (18) du système de contrôle de la pression des pneumatiques.
